# EUROPEAN PATENT APPLICATION

(11) **EP 0 708 004 A1**
(43) Date of publication of application: **24.04.1996**
(21) Application number: 95202826.4
(22) Date of filing: 18.10.1995
(51) Int. Cl.: B60R 25/10

(54) **System for securing objects which are not tied to a particular position**

(30) Priority: 19.10.1994 NL 9401737
(71) Applicant: PROFITTING B.V., NL-5467 KZ Veghel (NL)
(72) Inventor: Slot, Gerhardus Marinus, NL-5404 PW Uden (NL); Kruyver, Franciscus Joseph, NL-5467 KZ Veghel (NL)
(74) Representative: de Bruijn, Leendert C.

(57) **Abstract**

System for securing objects, especially vehicles, comprising
a) in or on the object:
   - a GPS-receiver which is able to supply data determining the position on the earth where the object is located,
   - a transmitter for transmitting these position determining data through a communication channel of a wireless telephone network,
b) in a central post:
   - a receiver for receiving the data tranmitted by said transmitter through said wireless telephone network.

Between the GPS-receiver and the transmitter on or in said object there is a coder for coding the data supplied by the GPS-receiver in combinations of tone frequency signals which thereafter are transmitted by said transmitter. In the central post the receiver is followed by a decoder for decoding the received tone frequency signals into suitable data signals. Each of said tone frequency signals has a frequency which is within the band width, avilable within said telephone network for each communication channel and has a time length sufficient to enable an error-free detection in said receiver even in the presence of short disturbances and noise within the communication channel.

## Description

The invention relates to a system for securing objects, especially vehicles, comprising
a) in or on the object:
   - a GPS-receiver which is able to supply data determining the position on the earth where the object is located,
   - a transmitter for transmitting these position determining data through a communication channel of a wireless telephone network,
b) in a central post:
   - a receiver for receiving the data tranmitted by said transmitter through said wireless telephone network.

Such a system is known from the prior art, for instance from the British patent application GB-2270405, the British patent application GB-2274188 and the international patent application WO-9305490. When activated these prior art systems supply the data, delivered by the GPS-receiver or eventually received before and stored in a memory, to a transmitter to transmit said data to the central post. In GB-2274188 it is indicated specifically that the data derived from the GPS-receiver is supplied to the transmitter through a modem. In other words, the data is transmitted to the central post through said transmitter in the form of well-known data signals.

In GB-2270405 it is indicated specifically that for the transmitting a so-called cellular telephone circuit can be used by means of which, in case of activation of the system, automatically the number of a similar telephone circuit in the central post is selected such that a (wireless) telephone connection will be established between the transmitter in the object and the receiver in the central post, through which telephone connection data signals can be transmitted thereafter.

Another prior art system is described in EP-0242099. Also this system utilizes a cellular mobile telephone system for communicating between the monitor circuit in or on the object and a central office. The communication is performed through modems which in an explicitly described embodiment function with a data rate of 1200 bits/second.

Because in these systems use is made of telephone circuits which function through the wireless telephone networks destined for mobile car telephones etc. one should take into account a high disturbance sensitivity of the data signals. It appears in practice that transmitting data signals through wireless telephone networks in general will cause problems and is certainly not optimal. A relative high percentage of the data signals transmitted through such telephone connections will reach the receiver side in a distorted condition caused by noise and/or short disturbances. Furthermore the relatively restricted bandwidth of the channels which are available within a wireless telephone network can have a significant influence. Irrespective of the used modulation method most data signals have in common that they consist of pulse bursts of very short duration and different frequencies whereby in the data signal as a whole relatively high frequency components may appear. These relatively high frequency components cannot be transmitted through the telephone network because of the restricted bandwidth as a result of which just for this reason alone the data signals will be distorted rather strongly when transmitted through a wireless telephone network. Certainly in case of positioning information, delivered by a GPS-receiver, each distorted bit may lead to a completely false interpretation at the receiver side of the position which was represented by the data.

An object of the invention is now to indicate in which manner a relatively reliable transmission of GPS-data between the objects and the central post can be realized even if use is made of the already existing wireless telephone networks.

Said object is fulfilled in a system of the type mentioned in the first paragraph in that between the GPS-receiver and the transmitter on or in said object there is a coder for coding the data supplied by the GPS-receiver in combinations of tone frequency signals which thereafter are transmitted by said transmitter, and that in the central post the receiver is followed by a decoder for decoding the received tone frequency signals into suitable data signals, whereby each of said tone frequency signals has a frequency which is within the band width, available within said telephone network for each communication channel and has a time length sufficient to enable an error-free detection in said receiver even in the presence of short disturbances and noise within the communication channel.

The use of signal bursts with relatively long duration and a frequency which in any case is within the bandwidth available on the respective channel will lead to a drastic reduction in the number of errors in the transmitted data caused by disturbances on the line or cause by a restricted bandwidth.

It is preferred that the applied signals are in conformity with the so-called DTMF-protocol (Digitally Tone Modulated Frequency Protocol), according to which protocol also tone selection signals are generated and transmitted in telephone networks. The use of so-called DTMF-signals (Digitally Tone Modulated Frequency Signals) has the advantage that the signals, which should be transmitted through the telephone connection, on the one hand with reference to their frequency always fit within the available frequency domain and further have a sufficient duration to be transmitted in a recognizable manner, even if the communication path is disturbed. Furthermore codercircuits and decodercircuits for coding respectively decoding DTMF-signals are widely available at relatively small costs, so that as a whole the total cost price of a system is not significantly influenced.

The use of DTMF-signals is as such described in US-4577182. This publication covers an alarm system comprising a number of monitoring circuits each located at a site to be secured and a central monitoring station. Each of the local monitoring circuits comprises a digital communicator and a cellular transceiver. The communication between the cellular transceiver and the central post is not described in detail. Furthermore no GPS-receiver is installed in any of the local monitoring circuits.

The invention will be explained in more detail with reference to the attached drawings.

Figure 1 illustrates those components of the system which are connected to the object, which is not tied to a specific position, such as a vehicle, a transport container or a valuable.

Figure 2 illustrates those components of the systems which are present in the central post.

The figures 3 and 4 illustrate somewhat amended embodiments of both circuit sections.

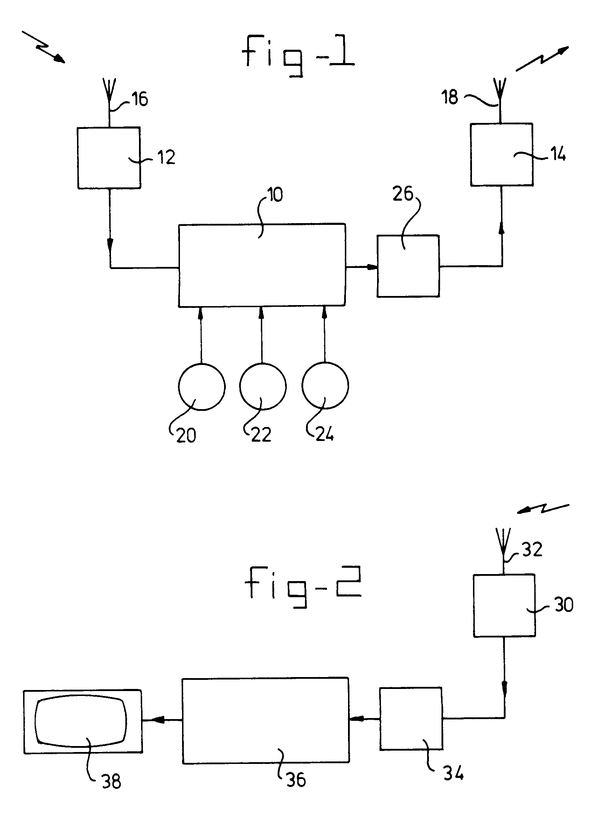

The circuit which is illustrated in figure 1 comprises a central processor receiving data signals from a GPS-receiver 12 comprising a receiving antenna 16. The data signals received from this GPS-receiver 12 are eventually stored intermediate in a memory in the processor 10. The output of the processor 10 is connected to a transmitter circuit 14 with an antenna 18. Preferably the transmitter circuit comprises a telephone circuit for carrying out communication over wireless functioning public telephone networks which are known as such. Further the processor 10 is connected to a number of detectors 20, 22, 24 with which, in case of an alarm, for instance in case of theft or robbery, the processor 10 can be activated to transmit data, delivered by the GPS-receiver, through the transmitter 14 to the central post.

The components described so far are equal to the components which were already known from for instance the British patent application GB-2270405. In this British specification use is made of a modem, known as such, for modulating the data which are supplied by the processor 10 to the transmitter 14. Dependent on the used protocol the most usual modems will transmit data signals with speeds of 1200 bps, 2400 bps or even higher speeds. As is indicated above the use of modem signals on a wireless telephone network has significant disadvantages. Especially the relatively restricted bandwidth of the channels on a wireless telephone network will lead to filtering out high-frequency components in the data signal and will therewith lead to a strong distortion of the data signal. Furthermore noise and disturbance of short duration will easily lead to a garbled data signal.

According to the invention between the processor 10 and the transmitter 14 a modulator 26 is inserted for modulating the data signals derived from the processor 10 using tone frequency signals with relatively long duration and a frequency which fits completely within the frequency band of the available telephone channel. In a preferred embodiment a so-called DTMF-coder 26 is installed. That is a circuit with which the data signals delivered by the processor 10 are modulated into so-called "Digitally Tone Modulated Frequency" signals, i.e. signals of the same type as are also used as selection signals in telephone networks. The advantage of these tone frequency signals is that the used frequencies are always within the frequency bands which is available during telecommunication, whereas furthermore the signals have a sufficient long duration to be able to transmit the signals in a recognizable manner, even if the communication path is disturbed.

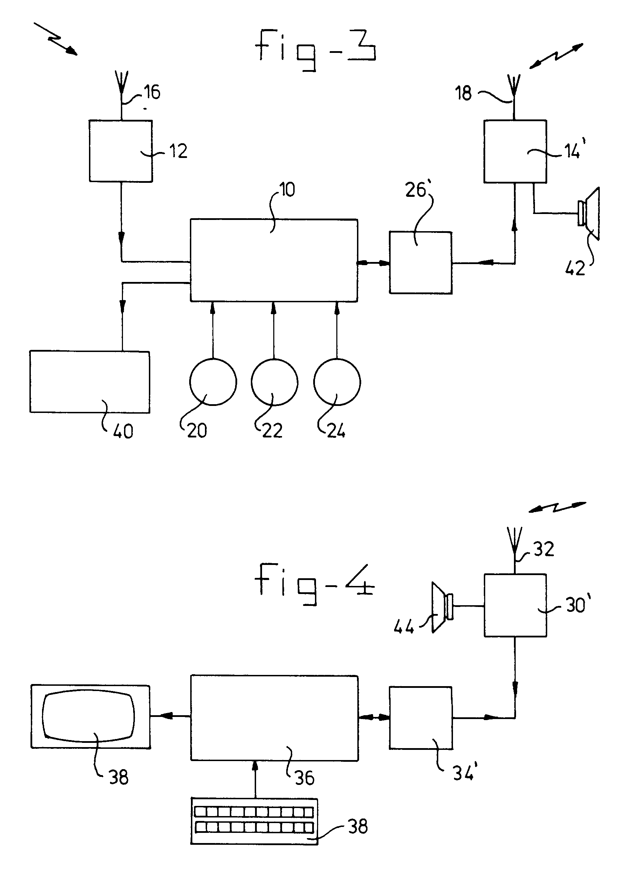

Figure 2 illustrates those components which are present in the central post of the system. To start with this central post comprises a receiver with receiving antenna 32 for receiving the signals transmitted by the transmitter 14. In a preferred embodiment of the invention this receiver 30 will, like the transmitter 14, comprise a telephone circuit destined for establishing communication over a public wireless telephone network. The output signal of the receiver 30 is supplied to a decoder 34 for decoding the received DTMF-signals and for reshaping these into normal data signals of the same type as in figure 1 were received by the processor 10 from the GPS-receiver 12. These data signals are transmitted to the processor 36 which processes these data signals and transforms them into a suitable message, for instance on an indication panel 38. The operating personnel of the central post will notice for instance on the panel 38 an indication that an alarm signal is provided and in the second place they will see the corresponding position of the transmitter circuit which did transmit the respective GPS-data. The panel 38 may for instance be used for displaying a part of a geographical map, onto which the position, corresponding to the received GPS-data, is marked.

The components of the central post illustrated in figure 2 may for instance form part of the emergency centre of a police corps or of a professional security/observation service.

In a further embodiment of the invention use is made also of the fact that in the meantime there is a telephone connection established between the telephone circuit 14 at the object to be monitored and the telephone circuit 30 at the central post. Through this established telephone connection it is of course possible to transmit signals from the central post to the telephone circuit 14 in the object to be monitored. The figures 3 and 4 show somewhat amended embodiments of both circuit sections. In figure 4 the DTMF-decoder is replaced by a combined coder/decoder circuit 34' and also the telephone circuit 30 is replaced by a telephone circuit 30' which is suitable for two-way communication. Through suitable means, for instance through an input keyboard 38, the operating personnel of the central post is now able to generate a command which from the processor 36 is supplied to the coder/decoder 34' wherein said command is converted into DTMF-signal bursts. These DTMF-signal bursts are transmitted through the telephone circuit 30' to the telephone circuit 14' at the object to be monitored. The signals received by said receiver 14' are supplied to the coder/decoder 26' which transforms the received signal burst into a command signal which is supplied to the processor 10. Depending on the type of the received command the processor 10 may now carry out different actions. In case the object to be secured is for instance a vehicle, an automobile, an airplane, a boat etc. then the processor may on the basis of the received command for instance supply an instruction signal to a module 40 by means of which the engine of the vehicle is switched off, a sirene is activated, the flashing lights are activated etc.. This type of measures in robbery of theft situations and also circuits for initiating or activating this type of alarm signals are known as such and do not need further explanation.

In case the telephone circuit 14' and also the telephone circuit 30' comprises a so-called audio-transducer in the form of a combined microphone/loudspeaker or something similar, known as such, then it is also possible on the basis of the received command signals to activate the processor 10 for controlling the telephone circuit 14' such that any sound received by the microphone 42 is through the normal telephone connection transmitted to the central post. In the central post now the telephone circuit 30' is also switched to normal audio use whereby the loudspeaker 44 is switched on. Therewith the personnel in the central post is able listen to all the sounds which are produced in or around the vehicle, such as conversation between thiefs, robbers etc..

The system according to the invention can be used for securing vehicles such as automobiles, busses, lorries etc., but it can also be used for other vehicles such as building machines, trains, bulldozers etc.. This last category of vehicles is often rented for a predetermined period and for a predetermined project. To avoid that the hirer will start using these machines for other purposes the system according to the invention may provide a good service. Even monitoring boats and airplanes is within the scope of the invention. Furthermore the system can be used successfully for retrieving transport containers which are fallen overboard of ships.

## Claims

1. System for securing objects, especially vehicles, comprising
a) in or on the object:
- a GPS-receiver which is able to supply data determining the position on the earth where the object is located,
- a transmitter for transmitting these position determining data through a communication channel of a wireless telephone network,
b) in a central post:
- a receiver for receiving the data tranmitted by said transmitter through said wireless telephone network,
characterized in that,
between the GPS-receiver and the transmitter on or in said object there is a coder for coding the data supplied by the GPS-receiver in combinations of tone frequency signals which thereafter are transmitted by said transmitter, and
that in the central post the receiver is followed by a decoder for decoding the received tone frequency signals into suitable data signals,
whereby each of said tone frequency signals has a frequency which is within the band width, available within said telephone network for each communication channel and has a time length sufficient to enable an error-free detection in said receiver even in the presence of short disturbances and noise within the communication channel.

2. System according to claim 1, characterized in that the applied signals are in conformity with the so-called DTMF-protocol (Digitally Tone Modulated Frequency Protocol), according to which protocol also tone selection signals are generated and transmitted in telephone networks.

3. System according to claim 1 or 2, characterized in that on or in the object a programmed processor is installed for controlling the functioning of the GPS-receiver, the coder and the transmitter.

4. System according to claim 3, characterized in that the central post comprises a telephone switching circuit for establishing a connection through the respective telephone network to the portable telephone circuit in or on the object.

5. System according to claim 4, characterized in that the processor is programmed such that after establishing a connection between the telephone circuit in the central post and the telephone circuit on or in the object the GPS-receiver is activated by the processor in or on the object for supplying data, which data after coding is transmitted through the telephone network to the central post.

6. System according to claim 4, characterized in that the processor is programmed such that after establishing the connection between the telephone circuit in the central post and the telephone circuit on or in the object from the GPS-receiver a signal is activated to supply data, which data after coding is transmitted through the telephone connection to the central post.
